(19) Europäisches Patentamt
European Patent Office
Office européen des brevets

(11) EP 1 517 316 A1

(12) **EUROPEAN PATENT APPLICATION**

(43) Date of publication:
**23.03.2005 Bulletin 2005/12**

(51) Int Cl.[7]: **G11B 7/24**, C09B 29/01, C09B 29/42

(21) Application number: **03021275.7**

(22) Date of filing: **19.09.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **CLARIANT INTERNATIONAL LTD.**
**4132 Muttenz (CH)**

(72) Inventor: **Graciet, Jean-Christophe**
**68128 Village-Neuf (FR)**

(54) **New azo type dyes for optical data recording**

(57) The present invention relates to new azo compounds and to their use as dyes in optical layers for optical data recording, preferably for optical data recording using a laser with a wavelength up to 450 nm.

The invention further relates to an optical layer comprising said dyes and to a write only read many (WORM) type optical recording medium capable of recording and reproducing information with radiation of blue laser, which employs an azo type dye in the optical layer.

EP 1 517 316 A1

## Description

The present invention relates to new azo compounds and to their use as dyes in optical layers for optical data recording, preferably for optical data recording using a laser with a wavelength up to 450 nm.
The invention further relates to an optical layer comprising said dyes and to a write only read many (WORM) type optical recording medium capable of recording and reproducing information with radiation of blue laser, which employs an azo type dye in the optical layer.

Recently, organic dyes have attracted considerable attentions in the field of diode-laser optical storage. Commercial recordable compact discs (CD-R) and recordable digital versatile discs (DVD-R) can contain, as recording layer, numerous dyes based on phthalocyanine, hemicyanine, cyanine and metallized azo structures. These dyes are suitable in their respective fields with the laser wavelength criteria. Other general requirements for dye media are strong absorption, high reflectance, high recording sensitivity, low thermal conductivity as well as light and thermal stabilities, durability for storage or non-toxicity.

For industrial application, these dyes have to be suitable for the spin coating process to prepare thin films, i. e. they have to be sufficiently soluble in the organic solvents generally applied in the spin coating process.

WORM (write once read many) type and erasable type optical recording media reproduce information by detecting variations in the reflectivity caused by physical deformation, by alterations of optical characteristics as well as by phase and magnetic properties of a recording layer before and after the recording.
Recordable compact discs (CD-R) are widely known as a WORM type optical recording medium. Recently, digital versatile discs (DVD) with increased information storage capabilities up to 4.7 GBytes have been commercialized.
The DVD-R technology adopts as a light source a red diode laser with a wavelength of 630-670 nm. Thereby the pit size and track interval can be reduced, increasing the information storage capacity by up to 6-8 times compared to CD-R's.

Blu-ray® discs (Blu-ray® disc is a standard developed by Hitachi Ltd., LG Electronics Inc., Matsushita Electric Industrial Co. Ltd., Pioneer Corporation, Royal Philips Electronics, Samsung Electronics Co. Ltd., Sharp Corporation, Sony Corporation, Thomson Multimedia) are going to be the next milestone in optical recording technology. Its new specification increases the data storage up to 27 GBytes per recording layer for a 12 cm diameter disc. By adopting a blue diode laser with a wavelength of 405 nm (GaN or SHG laser diodes), the pit size and track interval can be further reduced, again increasing the storage capacity by an order of magnitude.

The construction of optical data recording media is known in the art. An optical data recording media generally comprises a substrate and a recording layer, the optical layer. Usually discs or wavers of organic polymeric materials are used as substrates. Preferred substrates are polycarbonate (PC) or polymethylmethacrylate (PMMA). The substrate has to provide an even and uniform surface of high optical quality. The optical layer is deposited thereon in a thin and uniform film of high optical quality and defined thickness. Finally, a reflective layer, e.g. aluminium, gold or copper, is deposited upon the optical layer.

Advanced optical data recording media may comprise further layers, such as protective layers, adhesive layers or additional optical layers.

To provide for a thin and uniform film of the optical layer, the material is usually deposited by spin coating, vacuum evaporation, jet coating, rolling coating or soaking. The preferred process in industry is spin coating to form an optical layer of about 70 nm to 250 nm thickness. For the application in the spin coating process, the material of the optical layer has to be highly soluble in organic solvents.

The present invention relates to new azo compounds as described below. Surprisingly it has been found, that azo compounds as described below are useful as dye compounds in optical layers for optical recording media.

The present invention therefore further relates to optical layers comprising azo compounds as described below as dyes and to the use of said optical layers for optical dta recording media.

More particularly, the invention relates to azo type dyes, to an optical layer comprising said dyes and to a write only read many (WORM) type optical data recording medium capable of recording and reproducing information with radiation of blue laser of preferably 405 nm, which employ an azo type dye in the optical layer.

New azo type dyes according to the invention are compounds of the formula (I):

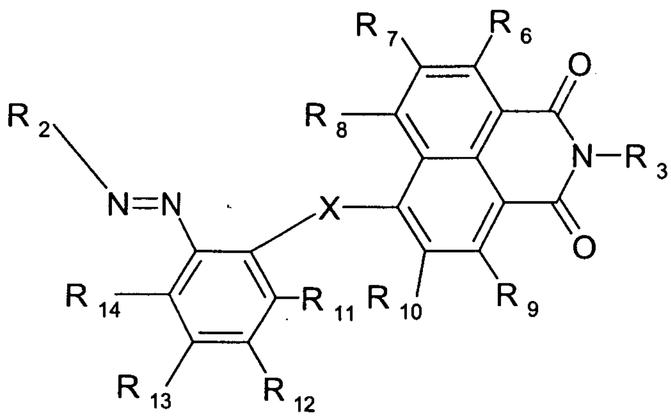

(I)

wherein

X is oxygen, sulfur or $NR_1$;

$R_1$ is $C_{1-8}$ alkyl, wherein the alkyl can be unsubstituted or substituted by hydroxy (-OH), $C_{6-12}$ aryl or $-NR_4R_5$, in which $R_4$ and $R_5$ are independently hydrogen, $C_{1-8}$ alkyl or $C_{6-12}$ aryl;

$R_2$ is a moiety of formula (IIa) or (IIIa)

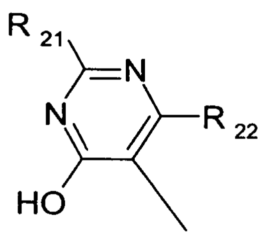

(IIa)

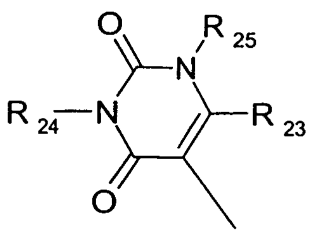

(IIIa)

$R_3$ is $C_{1-8}$ alkyl, wherein the alkyl can be unsubstituted or substituted by hydroxy (-OH), $C_{6-12}$ aryl or $-NR_4R_5$, in which $R_4$ and $R_5$ are independently hydrogen, $C_{1-8}$ alkyl or $C_{6-12}$ aryl;

$R_6$ to $R_{14}$ independently of one another, represent hydrogen, hydroxy (-OH), amino ($-NH_2$), nitro ($-NO_2$), cyano (-CN), $C_{1-8}$ alkyl, halogen;

$R_{21}$, $R_{22}$ independently of one another, represent hydroxy (-OH), amino ($-NH_2$), cyanoamino (-NHCN);

$R_{24}$, $R_{25}$ is $C_{1-8}$ alkyl.

In a preferred aspect, the present invention relates to a dye compound of the formula (I) wherein

X is sulfur or oxygen;

| | |
|---|---|
| $R_3$ | is $C_{1-4}$ alkyl, wherein the alkyl can be unsubstituted or substituted by hydroxy (-OH), $C_{6-12}$ aryl or $-NR_4R_5$, in which $R_4$ and $R_5$ are independently hydrogen, $C_{1-6}$ alkyl or $C_6$ aryl; |
| $R_6$ to $R_{14}$ | independently of one another, represent hydrogen, hydroxy (-OH), nitro ($-NO_2$), cyano (-CN), halogen; |
| $R_{21}$, $R_{22}$ | independently of one another, represent hydroxy (-OH), amino ($-NH_2$), cyanoamino (-NHCN); |
| $R_{24}$, $R_{25}$ | is $C_{1-4}$ alkyl. |

In a more preferred aspect, the present invention relates to a dye compound of the formula (I), wherein

| | |
|---|---|
| X | is sulfur or oxygen; |
| $R_3$ | is $C_{1-4}$ alkyl, wherein the alkyl can be substituted by hydroxy (-OH) or $-NR_4R_5$, in which $R_4$ and $R_5$ are independently $C_{1-4}$ alkyl; |
| $R_6$ to $R_{14}$ | independently of one another, represent hydrogen, hydroxy (-OH), nitro (-NO2), cyano (-CN), halogen; |
| $R_{21}$, $R_{22}$ | independently of one another, represent hydroxy (-OH), amino ($-NH_2$), cyanoamino (-NHCN); |
| $R_{24}$,$R_{25}$ | is $C_{1-2}$alkyl. |

In a most preferred embodiment, the present invention relates to an optical layer comprising at least one dye compound of the formulae (I) or (II) as respectively described above, wherein

| | |
|---|---|
| X | is sulfur; |
| $R_{21}$, $R_{22}$ | independently of one another, represent hydroxy (-OH) |
| $R_3$ | is $C_3$ alkyl, wherein the alkyl can be substituted by $NR_4R_5$, in which $R_4$ and $R_5$ are independently $C_{1-4}$ alkyl; |
| $R_6$ to $R_{14}$ | independently of one another, represent hydrogen, nitro ($-NO_2$) cyano (-CN), halogen; |
| $R_{24}$, $R_{25}$ | is $C_{1-2}$ alkyl. |

In another most preferred embodiment, the present invention relates to a compound according to formula (II) or (III):

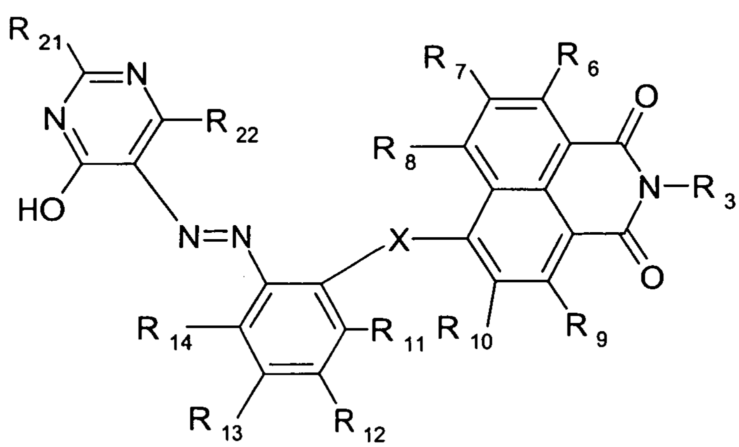

(II)

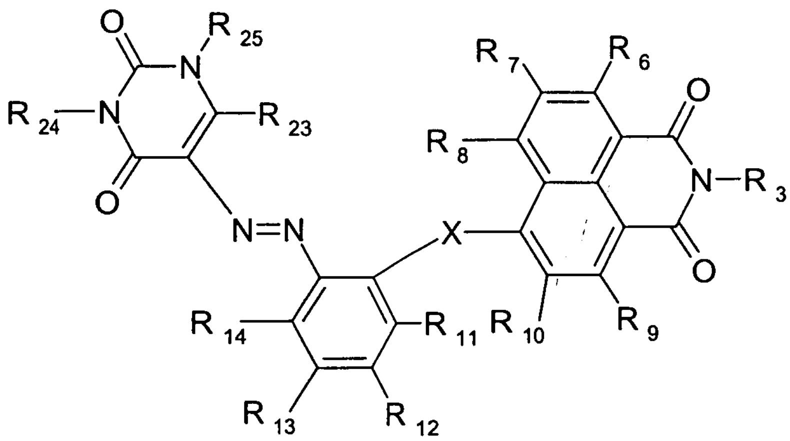

(III)

wherein the definitions as of above apply.

The present invention further relates to an optical layer comprising at least one dye compound of formula (I).

An optical layer according to the invention may also comprise a mixture of two or more, preferably of two dye compounds of formulae (II) or (III) as defined above. Preferred mixtures are mixtures of one formula (II) type dye with one formula (III) type dye.

Further, the invention relates to a method for producing optical layers comprising the following steps

(a) providing a substrate
(b) dissolving a dye compound or a mixture of dye compounds of formula (I) in an organic solvent to form a solution,
(c) coating the solution (b) on the substrate (a);
(d) evaporating the solvent to form a dye layer.

Preferred substrates are polycarbonate (PC) or polymethylmethacrylate (PMMA).

Organic solvents are selected from $C_{1-8}$ alcohol , halogen substituted $C_{1-8}$ alcohols, $C_{1-8}$ ketone, $C_{1-8}$ ether, halogen substituted $C_{1-4}$ alkane, or amides.

Preferred $C_{1-8}$ alcohols or halogen substituted $C_{1-8}$ alcohols are for example methanol, ethanol, isopropanol, diacetone alcohol (DAA), 2,2,3,3-tetrafluoropropanol, trichloroethanol, 2-chloroethanol, octafluoropentanol or hexafluorobutanol.

Preferred $C_{1-8}$ ketones are for example acetone, methylisobutylketone, methylethylketone, or 3-hydroxy-3-methyl-2-butanone.

Preferred halogen substituted $C_{1-4}$ alkanes are for example chloroform, dichloromethane or 1-chlorobutane.

Preferred amides are for example dimethylformamide or dimethylacetamide.

The optical layer (dye layer) obtained preferably has a thickness from 70 to 250 nm.

In a preferred aspect, the present invention provides for an optical layer suitable for high-density recording material, e.g. of the WORM disc format, in a laser wavelength range of from 350-450nm, preferably around 405 nm.

The dye compounds of formula (I) possess the required optical characteristics (such as high absortivity, high recording sensitivity as example), an excellent solubility in organic solvents, an excellent light stability and a decomposition temperature of 250-300°C.

**Preparation of azo type dyes according to the invention**

The azo dye compounds of formulae (I), respectively of formula (II) or (III) are obtained by condensing compound (C-1) or (C-2) with compound (D) in a ratio of from 1:1 upto preferably a ratio of 1:1.1, in polar solvent in the presence of an organic acid as catalyst. Compound (C-1) or (C-2) are obtained by reaction of diazotization of compound (A) and subsequent coupling with a compound of formula (B-1) or (B-2) respectively.

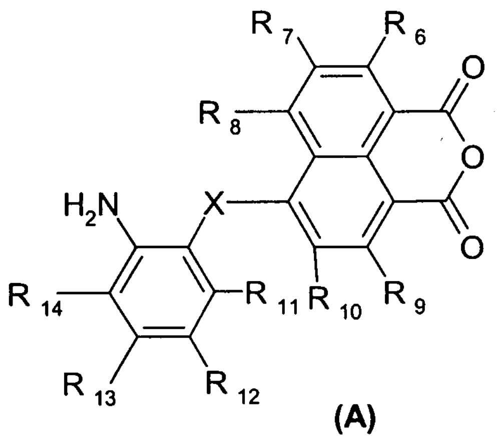

**(A)**

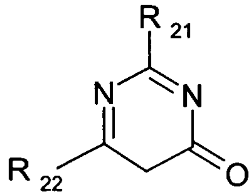

**(B-1)**

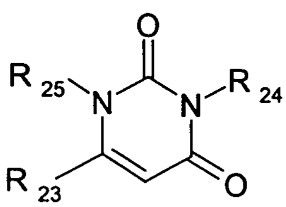

**(B-2)**

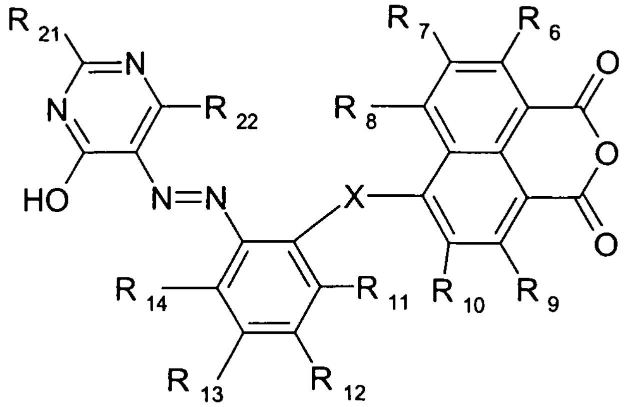

**(C-1)**

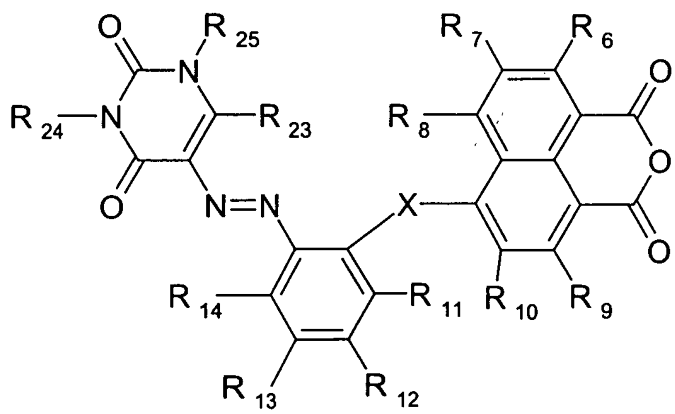

**(C-2)**

$H_2N-R_3$

**(D)**

wherein X, $R_3$, $R_6$ to $R_{14}$ and $R_{21}$ to $R_{25}$ are defined as above.

The process for preparation can be described by the following steps:

(a) an azo-coupling reaction between **(A)** and **(B-1)** or **(B-2)** to form a bivalent compound **(C-1)** or **(C-2).**
(b) a condensation reaction with primary (substituted) alkyl amine **(D)**.

The preferred solvent used in the diazotization and coupling reaction (step (a)) is acetic acid, water or a mixture of acetic acid and water in variable proportions, in presence of hydrochloric acid.
When a mixture of acetic acid and water is used, the preferred ratio between acetic acid and water is from 50/50 to 90/10 % by volume.

The preferred solvents used in the condensation reaction (step (b)) are selected from the group consisting of $C_{1-8}$ alcohols, dimethylformamide (DMF), N-methylpyrolidone (NMP) or a mixture of one of these solvents with water or water itself.
Most preferred solvents are dimethylformamide (DMF) or N-methylpyrolidone (NMP).

The preferred organic acids used in the condensation reaction (step (b)) are selected from the group consisting of formic acid, acetic acid or para-toluenesulfonic acid.
The most preferred organic acid used in the process is acetic acid.

**Preparation of high density optical data recording medium**

The preparation of a high density optical data recording medium / a high density optical disc conventionally comprises the following steps:

(a) providing a first substrate
(b) dissolving the dye in an organic solvent to form a solution,
(c) coating the first solution on the first substrate;
(d) drying the solution to form a dye layer and
(e) disposing a reflection layer on the dye layer and
(f) disposing a second substrate on the reflection layer

In step (f), preferably a second substrate is bonded with the first substrate to form the high-density optical disc recording medium. Conventional techniques for bonding are printing, glueing or melting.

## EXAMPLES

All azo dye compounds were prepared using standard procedures known in the art, involving reaction of the appropriate amino compound which is diazotized and reacted with the corresponding coupling agent in a 1:1 molar ratio in acetic acid in presence of hydrochloric acid and sodium nitrite or in a mixture of water and acetic acid, in presence of hydrochloric acid and sodium nitrite.
The azo compounds are then condensed with (substituted) alkyl amine in a 1:1.1 ratio, in polar solvent, i.e. dimethylformamide, in presence of organic acid as catalyst. Finally, the azo dye can be purified by recrystallization e.g. from an alcohol.

### Example 1

a) 13.0 parts of 4-(2-aminophenylthio)-naphthalic anhydride are stirred into 100 parts of acetic acid for 1 hour. 15 parts of 35 % hydrochloric acid are added to the mixture which is stirred for a 30 minutes additional time. Then the mixture is cooled to a temperature comprised into a 5 to 10°C range using an ice-bath. While temperature is kept at this value, 10 parts of 33.3 % sodium nitrite solution are added over a 30 minutes period time. The mixture is then stirred for 2 hours within the required temperature range. After total amino compound disappearance, excess of sodium nitrite is neutralized by aminosulfonic acid. The reaction mixture is then pumped into a suspension of 5.2 parts of barbituric acid into 50 parts of water, over a period of 45 minutes. A yellow precipitate appears rapidly. The reaction mixture is filtered after one hour of stirring at 25°C, washed with plenty of water and dried. A yellow compound is obtained with 98% yield.

b) 10 parts of previously obtained compound are mixed with 2.2 parts of 3-dimethylaminopropylamine in 10 parts of dimethylformamide and 1 part of acetic acid. The whole mixture is heated to 100°C and stirred for 6 hours. Reaction mixture is then cooled to 25°C, filtered and washed with 50 parts of methanol. The yellow presscake is then dried and the following azo dye is obtained:

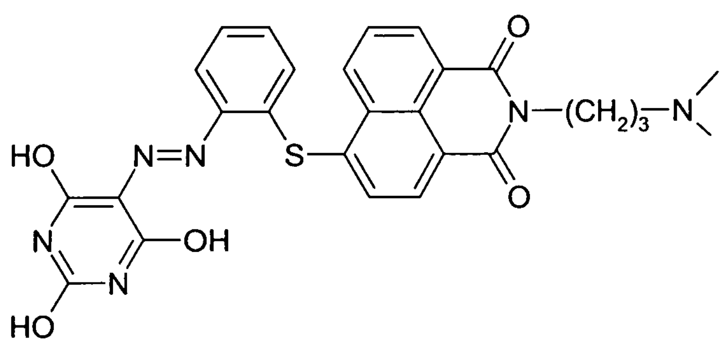

Yield: 90%; Decomp. point (DSC; sharp): 279°C; UV-Vis (EtOH) $\lambda_{max}$: 380 nm; ε ($\lambda_{max}$): 33000 1.mol$^{-1}$.cm$^{-1}$
MS (positive mode): 544 (M), 545 (M+1), 546 (M+2)
NMR $^1$H (DMSO d$^6$): 8.8 - 7.0 (mult, 9 H, H arom.), 4.1 (t, 2H, CO-N-$CH_2$), 2.3 (m, 2H, N-$CH_2$), 2.2 (s, 6H, 2 x $CH_3$), 1.8 (t, 2H, $CH_2$)

**Example 2**

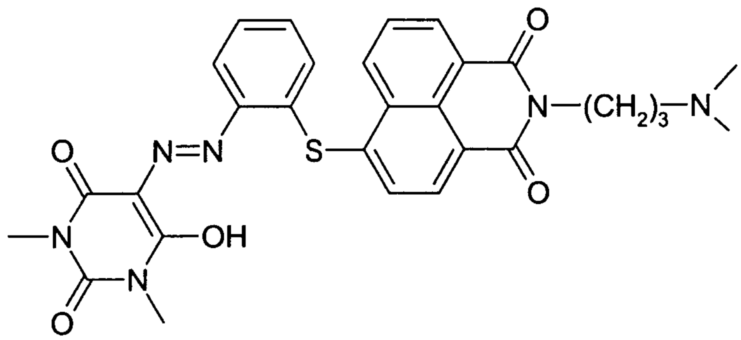

Yield: 90%; Melting point (sharp) : 25°C; Decomp. point (DSC; sharp): 255°C; UV-Vis (EtOH) $\lambda_{max}$: 380 nm; ε ($\lambda_{max}$): 38600 1.mol$^{-1}$.cm$^{-1}$
MS (positive mode) : 573 (M+1), 574 (M+2)
NMR $^1$H (DMSO d$^6$):8.9 - 7.1 (mult, 9H, H arom.), 4.0 (t, 2H, CO-N-$CH_2$), 3.4 (bs, 6H, 2 x $CH_3$), 2.2 (m, 2H, N-$CH_2$), 2.1 (s, 6H, 2 x $CH_3$), 1.8 (t, 2H, $CH_2$)

**Example 3**

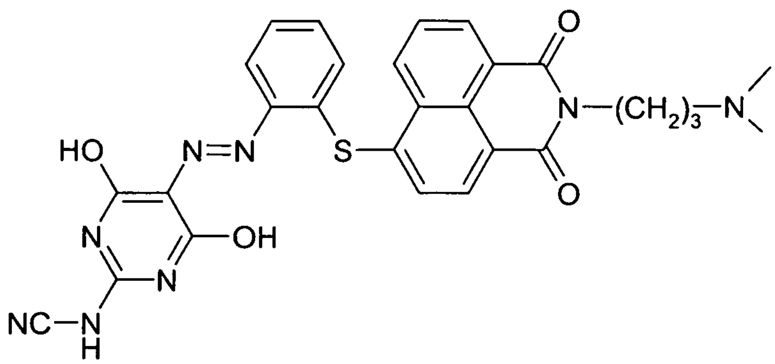

Yield: 85%; Decomp. point (DSC; sharp): 306°C; UV-Vis (EtOH) $\lambda_{max}$: 399 nm; ε ($\lambda_{max}$): 15000 1.mol$^{-1}$.cm$^{-1}$
MS (positive mode) : 569 (M+1), 570 (M+2)
NMR $^1$H (DMSO d$^6$): 9.5 (s, 1H, NH), 8.8-7.1 (mult, 9H, H arom.), 4.1 (t, 2H, CO-N-$CH_2$), 2.3 (m, 2H, N-$CH_2$), 2.2 (s, 6H, 2 x $CH_3$), 1.8 (t, 2H, $CH_2$)

**Example 4**

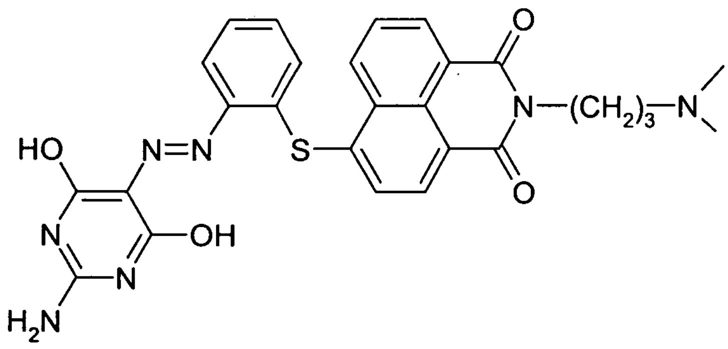

Yield: 85%; Decomp. point (DSC): 267°C; UV-Vis (EtOH) $\lambda_{max}$: 390 nm; ε ($\lambda_{max}$): 25000 1.mol$^{-1}$.cm$^{-1}$
MS (positive mode) : 544 (M+1), 545 (M+2)
NMR $^1$H (DMSO d$^6$):9.2 (bs, 2H, NH2), 8.9 - 7.0 (mult, 9H, H arom.), 4.2 (t, 2H, CO-N-$CH_2$), 2.4 (m, 2H, N-$CH_2$), 2.2 (s, 6H, 2 x $CH_3$), 1.9 (t, 2H, $CH_2$)

**Application Example**

The optical and thermal properties of the new azo dye compounds were studied. The new dyes show high absorption at the desired wavelengths. In addition, the shape of the absorption spectra, that still remains critical to the disc reflectivity and formation of clean mark edges, are composed of one major band, comprised in a range of from 350 to 500nm, preferably of from 350 to 400 nm.
More precisely, n values of the refractive index were evaluated between 2.3 and 2.7. Light stabilities were found comparable to commercial dyes which usually are stabilised with quenchers for the use in optical data recording.
Sharp threshold of thermal decomposition in the required temperature range characterizes the new azo dyes which is assumed to be desirable for the application in optical layers for optical data recording.
As a conclusion, the new azo dye compounds are within the specifications which are primarily required by the industry for the use of dyes in optical data recording, in particular in the next-generation optical data recording media (blu-ray disc) in the blue laser range.

**Claims**

1. A compound of formula (I)

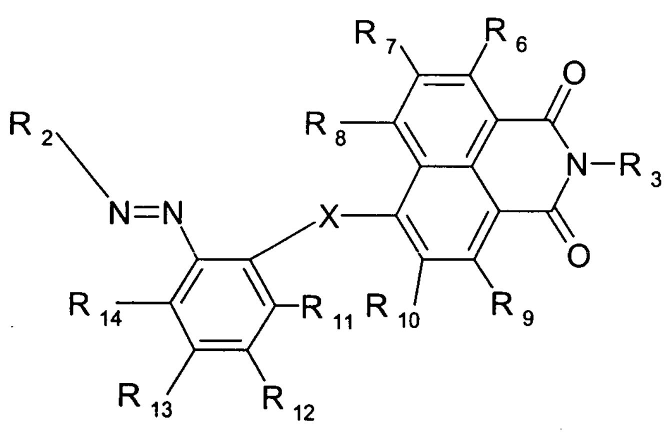

(I)

wherein

X is oxygen, sulfur or $NR_1$;
$R_1$ is $C_{1-8}$ alkyl, wherein the alkyl can be unsubstituted or substituted by hydroxy (-OH), $C_{6-12}$ aryl or $-NR_4R_5$, in which $R_4$ and $R_5$ are independently hydrogen, $C_{1-8}$ alkyl or $C_{6-12}$ aryl;
$R_2$ is a moiety of formula (IIa) or (IIIa)

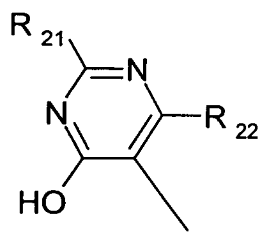

(IIa)

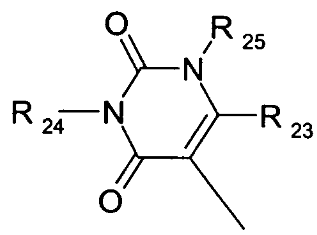

(IIIa)

$R_3$ is $C_{1-8}$ alkyl, wherein the alkyl can be unsubstituted or substituted by hydroxy (-OH), $C_{6-12}$ aryl or $-NR_4R_5$, in which $R_4$ and $R_5$ are independently hydrogen, $C_{1-8}$ alkyl or $C_{6-12}$ aryl;

$R_6$ to $R_{14}$ independently of one another, represent hydrogen, hydroxy (-OH), amino ($-NH_2$), nitro ($-NO_2$), cyano (-CN), $C_{1-8}$ alkyl, halogen;

$R_{21}$, $R_{22}$ independently of one another, represent hydroxy (-OH), amino ($-NH_2$), cyanoamino (-NHCN);

$R_{24}$, $R_{25}$ is $C_{1-8}$ alkyl.

**2.** A compound according to claim 1, wherein

X is sulfur or oxygen;
$R_3$ is $C_{1-4}$ alkyl, wherein the alkyl can be unsubstituted or substituted by hydroxy (-OH), $C_{6-12}$ aryl or $-NR_4R_5$, in which $R_4$ and $R_5$ are independently hydrogen, $C_{1-6}$ alkyl or $C_6$ aryl;
$R_6$ to $R_{14}$ independently of one another, represent hydrogen, hydroxy (-OH), nitro ($-NO_2$), cyano (-CN), halogen;
$R_{21}$, $R_{22}$ independently of one another, represent hydroxy (-OH), amino ($-NH_2$), cyanoamino (-NHCN);
$R_{24}$, $R_{25}$ is $C_{1-4}$ alkyl.

**3.** A compound according to claim 1, wherein

X is sulfur or oxygen;
$R_3$ is $C_{1-4}$ alkyl, wherein the alkyl can be substituted by hydroxy (-OH) or $-NR_4R_5$, in which $R_4$ and $R_5$ are independently $C_{1-4}$ alkyl;
$R_6$ to $R_{14}$ independently of one another, represent hydrogen, hydroxy (-OH), nitro ($-NO_2$), cyano (-CN), halogen;
$R_{21}$, $R_{22}$ independently of one another, represent hydroxy (-OH), amino ($-NH_2$), cyanoamino (-NHCN);
$R_{24}$, $R_{25}$ is $C_{1-2}$ alkyl.

**4.** A compound according to claim 1, wherein

X is sulfur;

$R_{21}$, $R_{22}$ independently of one another, represent hydroxy (-OH)
$R_3$ is $C_3$ alkyl, wherein the alkyl can be substituted by $NR_4R_5$, in which $R_4$ and $R_5$ are independently $C_{1-4}$ alkyl;
$R_6$ to $R_{14}$ independently of one another, represent hydrogen, nitro (-$NO_2$), cyano (-CN), halogen;
$R_{24}$, $R_{25}$ is $C_{1-2}$alkyl.

**5.** An optical layer comprising a dye compound according to claims 1 to 4.

**6.** An optical layer according to claim 5 comprising a mixture of at least two dye compounds according to formula (I).

**7.** A method for producing optical layers according to claims 5 and 6, comprising the following steps

(e) providing a substrate
(f) dissolving a dye compound or a mixture of dye compounds of formula (I) as defined in claims 1 to 4 in an organic solvent to form a solution,
(g) coating the solution (b) on the substrate (a);
(h) evaporating the solvent to form a dye layer.

**8.** A method according to claim 7, wherein the substrate is polycarbonate (PC) or polymethylmethacrylate (PMMA).

**9.** A method according to claim 7, wherein the organic solvent is selected from $C_{1-8}$ alcohol , halogen substituted $C_{1-8}$ alcohols, $C_{1-8}$ ketone, $C_{1-8}$ ether, halogen substituted $C_{1-4}$ alkane, or amides.

**10.** A method according to claim 7, wherein the $C_{1-8}$ alcohols or halogen substituted $C_{1-8}$ alcohols are selected from methanol, ethanol, isopropanol, diacetone alcohol (DAA), 2,2,3,3-tetrafluoropropanol, trichloroethanol, 2-chloroethanol, octafluoropentanol or hexafluorobutanol;
the $C_{1-8}$ ketones are selected from acetone, methylisobutylketone, methylethylketone, or 3-hydroxy-3-methyl-2-butanone;
the halogen substituted $C_{1-4}$ alkanes are selected from chloroform, dichloromethane or 1-chlorobutane; and
the amides are selected from dimethylformamide or dimethylacetamide.

**11.** A method according to claim 7, wherein the optical layer (dye layer) has a thickness from 70 to 250 nm.

**12.** An optical recording medium comprising an optical layer according to claims 5 or 6, wherein at least one dye compound of the formula (I) as defined in claims 1 to 4 is used.

European Patent Office

# EUROPEAN SEARCH REPORT

Application Number
EP 03 02 1275

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
| --- | --- | --- | --- |
| A | EP 1 149 873 A (HAYASHIBARA BIOCHEM LAB) 31 October 2001 (2001-10-31)<br>* page 2, line 28 - line 38 *<br>* page 19, line 10 - line 28 *<br>* page 21, line 8 - line 54 * | 1,7-12 | G11B7/24<br>C09B29/01<br>C09B29/42 |
| P,A | EP 1 347 030 A (HAYASHIBARA BIOCHEM LAB) 24 September 2003 (2003-09-24)<br>* page 15, line 22 - line 28 * | 1,7-12 | |
| A | US 4 052 378 A (LIEDEK EGON ET AL) 4 October 1977 (1977-10-04)<br>* the whole document * | 1 | |
| A | WO 98 49164 A (CIBA GEIGY AG) 5 November 1998 (1998-11-05)<br>* the whole document * | 1 | |
| A | DE 27 48 758 A (BASF AG) 10 May 1979 (1979-05-10)<br>* the whole document * | 1 | TECHNICAL FIELDS SEARCHED (Int.Cl.7)<br>G11B<br>C09B |

The present search report has been drawn up for all claims

1

| Place of search | Date of completion of the search | Examiner |
| --- | --- | --- |
| THE HAGUE | 16 February 2004 | Ketterer, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 03 02 1275

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2004

| Patent document cited in search report | | Publication date | Patent family member(s) | | | Publication date |
|---|---|---|---|---|---|---|
| EP 1149873 | A | 31-10-2001 | EP | 1149873 | A1 | 31-10-2001 |
| | | | WO | 0140382 | A1 | 07-06-2001 |
| EP 1347030 | A | 24-09-2003 | EP | 1347030 | A1 | 24-09-2003 |
| | | | WO | 0250210 | A1 | 27-06-2002 |
| | | | US | 2003064322 | A1 | 03-04-2003 |
| US 4052378 | A | 04-10-1977 | DE | 2503732 | A1 | 05-08-1976 |
| | | | CH | 606301 | A5 | 31-10-1978 |
| | | | DK | 5676 | A ,B, | 31-07-1976 |
| | | | FR | 2299382 | A1 | 27-08-1976 |
| | | | GB | 1533155 | A | 22-11-1978 |
| WO 9849164 | A | 05-11-1998 | AU | 7527098 | A | 24-11-1998 |
| | | | CN | 1252802 | T | 10-05-2000 |
| | | | WO | 9849164 | A1 | 05-11-1998 |
| | | | EP | 0977754 | A1 | 09-02-2000 |
| | | | JP | 2002501497 | T | 15-01-2002 |
| | | | TW | 526486 | B | 01-04-2003 |
| | | | US | 6245403 | B1 | 12-06-2001 |
| DE 2748758 | A | 10-05-1979 | DE | 2748758 | A1 | 10-05-1979 |

EPO FORM P0459

For more details about this annex : see Official Journal of the European Patent Office, No. 12/82